# EUROPÄISCHE PATENTSCHRIFT

(11) **EP 0 986 594 B1**
(45) Veröffentlichungstag und Bekanntmachung des Hinweises auf die Patenterteilung: **08.08.2001**
(21) Anmeldenummer: 98929361.8
(22) Anmeldetag: 22.05.1998
(51) Int. Cl.: C08G 18/10, C08G 18/32, C08G 18/12, C08G 18/75, C08K 3/00

(54) **VERFAHREN ZUR HERSTELLUNG VON EINKOMPONENTIGEN DICHTUNGS- UND BESCHICHTUNGSMASSEN AUF POLYURETHANBASIS**
METHOD FOR PRODUCING ONE-COMPONENT SEALING AND COATING COMPOUNDS WITH A POLYURETHANE BASE
PROCEDE DE PRODUCTION DE MATIERES D'ETANCHEITE ET DE RECOUVREMENT A UN COMPOSANT A BASE DE POLYURETHANE

(30) Priorität: 04.06.1997 DE 19723355
(43) Veröffentlichungstag der Anmeldung: 22.03.2000
(73) Patentinhaber: Sika Chemie GmbH, D-70439 Stuttgart (DE)
(72) Erfinder: SCHÄFER, Martin, D-71732 Tamm (DE); MORONI, Wilko, D-37520 Osterode/Harz (DE); HILLER, Michael, D-74369 Löchgau (DE)
(74) Vertreter: Wolf, Eckhard, Dr.-Ing.
(86) Internationale Anmeldenummer: EP9803027
(87) Internationale Veröffentlichungsnummer: WO9855524

(56) Entgegenhaltungen:
- EP-A- 0 469 751
- EP-A- 0 516 110
- GB-A- 2 290 794
- US-A- 4 952 621

## Beschreibung

Die Erfindung betrifft ein Verfahren zur Herstellung von einkomponentigen Dichtungs- und Beschichtungsmassen auf Polyurethanbasis.

Bindemittel für Dichtungs- und Beschichtungsmaterialien, welche Isocyanat-Prepolymere enthalten, die durch Reaktion von Isocyanaten mit Verbindungen mit aktiven Wasserstoffatomen, wie z. B. Aminen oder Alkoholen, hergestellt werden können und unter Einwirkung von Feuchtigkeit aushärten, sind bekannt und genau untersucht. Die DE-A 1 520 139 beschreibt beispielsweise ein Verfahren zur Herstellung von feuchtigkeitshärtenden Mischungen aus Polyisocyanaten und Polyketiminen oder Polyaldiminen, bei dem als Polyisocyanate Isocyanat-Prepolymere verwendet werden. Aus der DE-A 2 018 233 sind durch Feuchtigkeit härtbare Zubereitungen aus Isocyanatgruppen aufweisenden Verbindungen und Polyoxazolidinen bekannt.

EP-A 0 702 039 beschreibt ein Verfahren zur Herstellung von Isocyanat-Prepolymeren durch Umsetzung von aromatischen oder cycloaliphatischen Diisocyanaten mit einer Polyolkomponente mit der Maßgabe, daß in den Isocyanat-Prepolymeren ein Restgehalt an monomerem Diisocyanat von weniger als 0,5 Gew.% vorhanden ist. Bei Verwendung von cycloaliphatischen Diisocyanaten muß dort nach beendeter Reaktion das überschüssige Diisocyanat durch Dünnschichtdestillation bis zu dem gewünschten Restgehalt von weniger als 0,5 Gew.% entfernt werden. Weiter ist es aus der EP-A 0 702 039 und aus der DE-A 1 520 139 bekannt, das genannte Isocyanat-Prepolymer mit dem geringen Restgehalt an monomerem Diisocyanat zur Herstellung eines Dichtungs- und Beschichtungsmaterials mit Füllstoffen und mit einem H₂O-reaktiven Härter zu versetzen. Um Qualitätskonstanz und Lagerstabilität von Dichtungs- und Beschichtungsmaterialien auf Basis der zuvor beschriebenen Prepolymeren zu gewährleisten, darf nur ein geringer Feuchtigkeitsgehalt vorhanden sein. So kann beispielsweise eine Reaktion von Feuchtigkeit, welche über die Füllstoffe eingetragen wird, mit den freien Isocyanatgruppen unter CO₂-Abspaltung zu einem gefährlichen Druckaufbau in einem Gebinde führen. Hinzu kommt, daß in Gegenwart hydrolyseempfindlicher, latenter Aminhärter, z. B. vom Typ der Oxazolidine, Ketimine oder Aldimine, geringste Restfeuchtigkeit durch Reaktion mit dem Härter zu einer Verdickung bzw. Aushärtung der Materialien im Gebinde führt. Nach Erreichen einer bestimmten Viskosität, beispielsweise von mehr als 8.000 mPa.s, sind die Materialien nicht mehr streichbar oder anderweitig zu verarbeiten. Deshalb wurden in der Praxis aufwendige und kostspielige Trocknungsverfahren angewendet, wie z. B. der Einsatz chemischer Trockenmittel oder einer aufwendigen physikalischen Vortrocknung.

Ausgehend hiervon liegt der Erfindung die Aufgabe zugrunde, ein Verfahren zur Herstellung von Dichtungs- und Beschichtungsmassen zur Verfügung zu stellen, mit dem eine verbesserte Lagerstabilität bei gleichzeitiger Reduzierung des Herstellungsaufwandes erreicht werden kann.

Diese Aufgabe wird erfindungsgemäß gelöst durch ein in-situ-Verfahren, welches folgende Schritte umfaßt:
- Rühren eines Gemisches aus einer Polyolkomponente und einer Diisocyanatkomponente, wobei intermediär ein Isocyanat-Prepolymer mit einem Restgehalt an monomerem Diisocyanat von > 2 Gew.% erhalten wird;
- Eindispergieren von Pigmenten und anorganischen Füllstoffen und Zugeben von Lösungsmittel unter Rühren, wobei der Restgehalt an monomerem Diisocyanat mit der über die Füllstoffe eingebrachten Feuchtigkeit reagiert und ein H₂O-Gehalt von < 0,01 Gew.% in der Reaktionsmischung erhalten wird;
- Zugeben eines H₂O-reaktiven latenten Härters und ggf. mindestens eines Katalysators und luftdichtes Abfüllen der resultierenden Dichtungs- und Beschichtungsmasse.

Vorteilhafte Ausgestaltungen der Erfindung ergeben sich aus den Unteransprüchen.

Die Erfindung wird nachfolgend anhand der Zeichnung und einiger Ausführungsbeispiele näher erläutert.

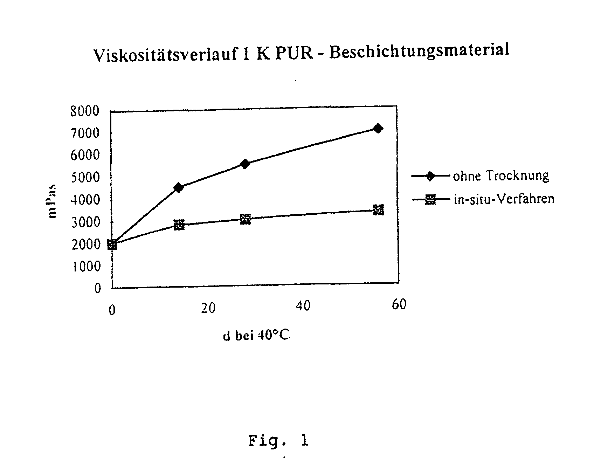

Fig. 1 zeigt den Viskositätsverlauf einer einkomponentigen Polyurethan-Beschichtungsmasse gemäß der Erfindung (untere Kurve) und einer Beschichtungsmasse gemäß dem Stand der Technik (obere Kurve).

In dem Verfahren gemäß der vorliegenden Erfindung zur Herstellung von Dichtungs- und Beschichtungsmassen werden in einem ersten Prozeß-Schritt isocyanathaltige Prepolymere als Ausgangsbindemittel hergestellt. Für Bodenbeschichtungen im Außenbereich, insbesondere von Balkonen, ist es wichtig, daß die isocyanathaltigen Prepolymeren gleichzeitig verseifungs- und lichtstabil sind. Isocyanatprepolymere auf Basis von Polyetherpolyolen sind verseifungsstabil aber wenig lichtstabil. Andererseits sind Isocyanatprepolymere auf Basis von Polyesterpolyolen, Polyesterpolycarbonatpolyolen und Polyhydroxyacrylaten lichtstabil, können aber aufgrund ihrer schlechten Verseifungsstabilität nicht in direkten Kontakt mit einem Betonuntergrund gebracht werden. Darüberhinaus besitzen diese Polyole eine sehr hohe Viskosität, was den Einsatz großer Lösungsmittelmengen erforderlich macht. Die Verwendung großer Lösungsmittelmengen ist aber unter ökologischen Gründen von Nachteil. Durch Abmischungen von Polyesterpolycarbonatdiolen bzw. Polyhydroxyacrylaten mit Polyethern erhält man Bindemittel, die eine niedrige Viskosität aufweisen und bei deren Vernetzung mit cycloaliphatischen Diisocyanaten und ggf. latenten Aminhärtern Blockcopolymere gebildet werden, die sehr gute Verseifungs- und Lichtbeständigkeiten besitzen. In dem erfindungsgemäßen Verfahren wird als Polyolkomponente vorzugsweise ein Gemisch aus einem Polyalkylenetherpolyol und einem Polyesterpolycarbonatdiol eingesetzt. Es können auch Gemische aus einem Polyalkylenetherpolyol und einem Polyester-polyetherpolyol (Fettsäureester) bzw. einem Polyhydroxyacrylat eingesetzt werden.

Bevorzugt eingesetzt werden Polyalkylenetherpolyole des Molekulargewichtsbereichs von etwa 1000 bis etwa 6000 g/Mol. Besonders bevorzugt ist ein Polypropylenglycol, difunktionell, mit einem mittleren Molekulargewicht von 2000 g/Mol oder ein Polypropylenglycol, trifunktionell, mit einem mittleren Molekulargewicht von 4000 g/Mol. Als weitere Komponente des Polyolgemisches wird in dem Verfahren gemäß der Erfindung ein Polyestercarbonatdiol mit einem mittleren Molekulargewicht von etwa 1500 bis etwa 2500 g/Mol, vorzugsweise von 2000 g/Mol, eingesetzt. Die Polyesterpolycarbonatdiole stellen beispielsweise Polycarbonate des 6-Hydroxyhexansäure-6-hydroxyhexylesters dar.

Als Ausgangskomponente für das Isocyanat-Prepolymere werden bei dem erfindungsgemäßen Verfahren vorwiegend cycloaliphatische Diisocyanate eingesetzt. Unter cycloaliphatischen Diisocyanaten sind solche zu verstehen, die pro Molekül mindestens einen cycloaliphatischen Ring aufweisen und bei denen mindestens eine der beiden Isocyanatgruppen direkt mit einem cycloaliphatischen Ring verknüpft ist. Als solche eignen sich beispielsweise cycloaliphatische Diisocyanate wie 1-Isocyanato-3,3,5-trimethyl-5-isocyanatomethyl-cyclohexan (Isophorondiisocyanat, IPDI).

Die zum Einsatz kommenden Diisocyanate weisen unterschiedlich reaktive Isocyanatgruppen im Molekül auf. 1-Isocyanato-3,3,5-trimethyl-5-isocyanatomethyl-cyclohexan (IPDI) besitzt beispielsweise eine primäre und eine sekundäre Isocyanat-Gruppe, die sich in ihrer Reaktivität bezüglich der OH/NCO-Reaktion signifikant unterscheiden.

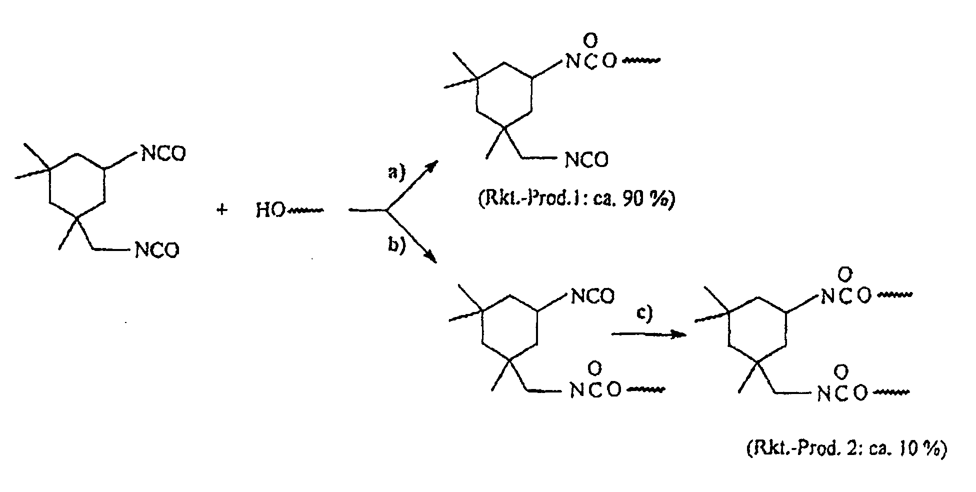

In Gegenwart von Lewis-Säuren wie z. B. Dibutylzinndilaurat ist die Reaktivität der sekundären NCO-Gruppe - siehe Reaktionsweg a) - um etwa einen Faktor 10 höher als die der primären - siehe Reaktionsweg b) - (N. Marschner, H. Höcker, Makromol. Chem. 191, 1843-1852 (1990)).

Bei der Umsetzung von IPDI mit Diolen im molaren Verhältnis 2 : 1 nach obigem Reaktionsschema erhält man eine kinetisch kontrollierte Produktverteilung der Reaktionsprodukte 1 zu 2 von ca. 9 : 1. Die Folge hieraus ist, daß ca. 10 % des monomeren Diisocyanats überhaupt nicht mit Polyol abreagiert und am Ende der Reaktion als Restmonomeres vorliegt. Bei Umsetzungen eines Diols mit mittlerem Molekulargewicht von ca. 2000 g/Mol mit IPDI führt dies zu einem Restmonomerengehalt an IPDI von 2,5 - 2,8 Gew.%.

Die Herstellung des Prepolymeren erfolgt durch Rühren der Polyolkomponente und des IPDI in einem Vakuumdissolver in einem Temperaturbereich von 50 bis 100 °C, vorzugsweise bei 90 °C, für etwa 90 Min., bis der Gehalt an monomerem IPDI nicht weiter abnimmt.

In einem zweiten Prozeß-Schritt werden, ohne die entstandenen Reaktionsprodukte zu isolieren, Pigmente und anorganische Füllstoffe aus der Gruppe von Schwerspat (BaSO₄), Calciumcarbonat, Talkum oder Quarzmehl, welche, bezogen auf den Füllstoff, einen Feuchtigkeitsgehalt von 0,1 bis 1 Gew.% aufweisen, in einer Menge bis zu 60 Gew.%, bezogen auf das Gesamtgewicht der Komponenten, unter starkem Rühren ebenfalls bei 90 °C eingetragen. Gleichzeitig mit Pigmentpulver und Füllstoff wird ein Lösungsmittel aus der Gruppe von Ethylacetat, Butylacetat, Methylethylketon, Methoxypropylacetat, Toluol, Xylol oder Gemische derselben in einer Menge bis zu 20 Gew.%, bezogen auf das Gesamtgewicht der Komponenten, zugegeben. Es wird bei 90 °C für weitere 45 Minuten gerührt, wobei das überschüssige monomere Diisocyanat mit dem über die Füllstoffe eingebrachten Wasser abreagiert. Nach dem Abkühlen und Zugabe eines hydrolyseempfindlichen, latenten Härters und ggf. mindestens eines Katalysators wird das Material luftdicht abgefüllt. Auf diese Weise hergestellte Dichtungs- und Beschichtungsmassen zeichnen sich durch einen besonders niedrigen Feuchtigkeitsgehalt und eine hieraus resultierende hohe Lagerstabilität aus.

Die hydrolyseempfindlichen, latenten Härter können aus der Gruppe von Oxazolidin, Bisoxazolidin, Ketimin oder Aldimin gewählt werden; der mindestens eine Katalysator kann aus der Gruppe von p-Toluolsulfonsäure, Dibutylzinndilaurat, Zinkchlorid oder organischen Säureanhydriden gewählt werden. Bevorzugt verwendet wird ein Bisoxazolidinhärter. Die Härtung dieses Systems beruht auf einer Reaktion der Oxazolidinringe mit Luftfeuchtigkeit, bei der sich der Oxazolidinring an der Bindung zum Sauerstoff öffnet. Es folgt die Reaktion des so gebildeten Aminalkohols mit dem Isocyanat-Prepolymer.

In Fig. 1 ist der Viskositätsverlauf eines einkomponentigen Polyurethan-Beschichtungsmaterials für das in-situ-Verfahren gemäß der Erfindung (untere Kurve) und für ein Verfahren gemäß dem Stand der Technik (obere Kurve) über einen Zeitraum von 8 Wochen und eine Lagertemperatur von 40 °C gezeigt. Aus der Abbildung ist ersichtlich, daß der Viskositätsverlauf bei dem erfindungsgemäßen Verfahren, bei dem das überschüssige monomere Diisocyanat mit dem über die Füllstoffe eingebrachten Wasser reagiert und so zu einer Trocknung der Beschichtungsmasse führt, wesentlich günstiger ist als bei dem Verfahren ohne Trocknung gemäß dem Stand der Technik.

### Ausführungsbeispiele:

### Beispiel 1:

1200 g Polypropylenglycol, difunktionell, mittleres Molekulargewicht 2000 g/Mol, 1200 g Polyesterpolycarbonatdiol, mittleres Molekulargewicht 2000 g/Mol (Desmophen C200, Marke der Fa. Bayer) und 550 g 1-Isocyanato-3,3,5-trimethyl-5-isocyanatomethyl-cyclohexan (IPDI) werden in einem Vakuumdissolver bei 90 °C gerührt, bis der Gehalt an monomerem IPDI (ca. 2,5 - 2,8 Gew.% IPDI) nicht weiter abnimmt (ca. 90 Minuten). Anschließend werden unter starkem Dispergieren bei 90 °C 4834 g BaSO₄, 400 g Pigmentpulver und 1400 g Xylol eingetragen. Nach einer Nachrührzeit von 45 Minuten bei 90 °C wird die Reaktionsmischung auf Raumtemperatur abgekühlt. Sodann werden 400 g eines Bisoxazolidinhärters (Härter OZ der Fa. Bayer), 1 g Dibutylzinndilaurat und 10 g 4-Methylhexahydrophthalsäureanhydrid hinzugegeben. Man erhält eine Beschichtungsmasse mit folgenden Kenndaten:
Festkörpergehalt: 86 %
Viskosität 20 °C, 2 Pa.s
Gehalt an monomerem IPDI 0,14 %
Gehalt an H₂O: 0,005 %

Ausgehärtetes Material (7 Tage bei 23 °C, 50 % rel. LF):
Zugfestigkeit: 9 N/mm²
Bruchdehnung: 400 %

Vor Zugabe der Füllstoffe beträgt der Restgehalt an monomerem IPDI 2,8 Gew.%, bezogen auf das reine Bindemittel (30 % der Gesamtformulierung), was einem Gehalt an 0,0038 Mol IPDI entspricht.

Der Wassergehalt des BaSO₄ beträgt ca. 0,14 Gew.%, bezogen auf reines BaSO₄ (48 % der Gesamtformulierung), was einem Gehalt an 0,0037 Mol H₂O entspricht.

Während des 45minütigen Nachrührens der Reaktionsmischung in Gegenwart von BaSO₄ kommt es zu folgender Trocknungsreaktion:

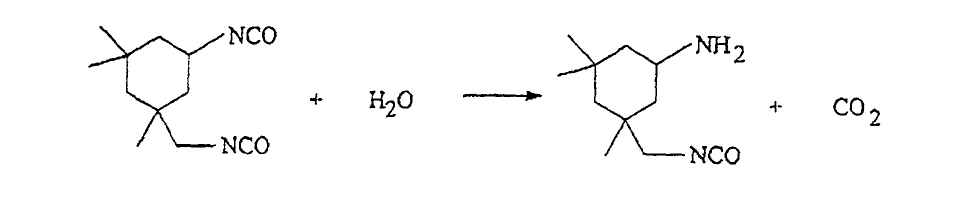

Das entstandene Amin reagiert in unspezifischen Folgereaktionen mit weiteren in der Reaktionsmischung enthaltenen NCO-Gruppen unter Ausbildung von Harnstoffbindungen ab. Näherungsweise kann man also für die Trocknungsreaktion ein stöchiometrisches Verhältnis von IPDI zu H₂O von 1 : 1 annehmen. Dies stimmt mit den in der Praxis gefundenen Werten auch sehr gut überein.

In der Endformulierung wurden folgende Werte gefunden:

| | | |
|---|---|---|
| Monomeres IPDI | 0,14 Gew.% | => 6x10⁻⁴ Mol |
| H₂O | 0,005 Gew.% | => 3x10⁻⁴ Mol. |

### Vergleichsbeispiel:

In eine Mischung bestehend aus 1500 g Prepolymer 1 (Umsetzungsprodukt eines Polyetherpolyols auf Basis von Propylenoxid mit einem Äquivalentgewicht von ca. 1000 g/Val mit IPDI mit einem Restmonomerengehalt von < 0,5 %, (Desmodur E41, Marke der Fa. Bayer)) und 1500 g Prepolymer 2 (Umsetzungsprodukt eines Polyesterpolycarbonatdiols mit IPDI mit einem Molekulargewicht von ca. 2000 g/Mol und einem Restmonomerengehalt von < 0,5 %, (Desmodur VPLS 2958, Marke der Fa. Bayer)) werden unter starkem Dispergieren bei Raumtemperatur 4789 g BaSO₄, 400 g Pigmentpulver und 1400 g Xylol eingetragen. Es werden 400 g eines Bisoxazolidinhärters (Härter OZ der Fa. Bayer), 1 g Dibutylzinndilaurat und 10 g
4-Methyl-hexahydrophthalsäureanhydrid hinzugegeben. Man erhält eine Beschichtungsmasse mit folgenden Kenndaten:
Festkörpergehalt: 86 %
Viskosität 20 °C, 2 Pa.s
Gehalt an monomerem IPDI < 0,12 %
Gehalt an H₂O: 0,07 %

Ausgehärtetes Material (7 Tage bei 23 °C, 50 % rel. LF):
Zugfestigkeit: 9 N/mm²
Bruchdehnung: 400 %

### Beispiel 2:

1000 g Polypropylenglycol, trifunktionell, mittleres Molekulargewicht 4000 g/Mol, 1000 g einer 80 %igen Lösung eines Polyhydroxyacrylates, ca. trifunktionell, mittleres Molekulargewicht Mn = 1300 g/Mol (Joncryl SCX-507, Fa. Jonson Polymer) in Butylacetat mit einem OH-Gehalt von 4,2 % bezogen auf den Feststoff, und 650 g 1-Isocyanato-3,3,5-trimethyl-5-isocyanatomethyl-cyclohexan (IPDI) werden in einem Vakuumdissolver bei 90 °C gerührt, bis der Gehalt an monomerem IPDI (ca. 2,6 Gew.% IPDI) nicht weiter abnimmt (ca. 90 Minuten). Anschließend werden unter starkem Dispergieren bei 90 °C 5139 g BaSO₄, 400 g Pigmentpulver und 1400 g Xylol eingetragen. Nach einer Nachrührzeit von 45 Minuten bei 90 °C wird die Reaktionsmischung auf Raumtemperatur abgekühlt, und es werden 400 g eines Bisoxazolidinhärters (Härter OZ der Fa. Bayer), 1 g Dibutylzinndilaurat und 10 g 4-Methylhexahydrophthalsäureanhydrid hinzugegeben. Man erhält eine Beschichtungsmasse mit folgenden Kenndaten:
Festkörpergehalt: 84%
Viskosität 20 °C, 3 Pa.s
Gehalt an monomerem IPDI 0,18 %
Gehalt an H₂O: 0,005 %

Ausgehärtetes Material:
Zugfestigkeit: 10 N/mm²
Bruchdehnung: 80 %

### Beispiel 3:

1500 g Propylenglycol, trifunktionell, mittleres Molekulargewicht 4000 g/Mol, 528 g eines Fettsäureesters, ca. trifunktionell, mittleres Molekulargewicht 561 g/Mol (Sovermol Pol 750 der Fa. Henkel) mit einem OH-Gehalt von 9,1 %, bezogen auf den Feststoff, und 810 g 1-Isocyanato-3,3,5-trimethyl-5-isocyanatomethylcyclohexan (IPDI) werden in einem Vakuumdissolver bei 90 °C gerührt, bis der Gehalt monomerem IPDI (ca. 2,8 Gew.% IPDI) nicht weiter abnimmt (ca. 90 Minuten). Anschließend werden unter starkem Dispergieren bei 90 °C 5039 g BaSO₄, 400 g Pigmentpulver und 1312 g Xylol eingetragen. Nach einer Nachrührzeit von 45 Minuten bei 90 °C wird die Reaktionsmischung auf Raumtemperatur abgekühlt, und es werden 400 g eines Bisoxazolidinhärters (Härter OZ der Fa. Bayer), 1 g Dibutylzinndilaurat und 10 g 4-Methylhexahydrophthalsäureanhydrid hinzugegeben. Man erhält eine Beschichtungsmasse mit folgenden Kenndaten:
Festkörpergehalt: 86 %
Viskosität 20 °C, 2 Pa.s
Gehalt an monomerem IPDI 0,18 %
Gehalt an H₂O: 0,005 %

Ausgehärtetes Material:
Zugfestigkeit: 12 N/mm²
Bruchdehnung: 50 %

Die Formulierung der Beschichtungsmassen aus den Beispielen 1, 2 und 3 enthält:

| | |
|---|---|
| 28 - 34 | Gew.% Prepolymer |
| 52 - 56 | Gew.% Füllstoffe/Pigmente |
| 14 - 16 | Gew.% Lösungsmittel |
| 4 | Gew.% latenter Härter. |

Die nach dem erfindungsgemäßen Verfahren hergestellten Dichtungs- und Beschichtungsmassen weisen eine hohe Lagerstabilität von mindestens einem Jahr auf.

## Patentansprüche

1. Verfahren zur Herstellung von einkomponentigen Dichtungs- und Beschichtungsmassen auf Polyurethanbasis durch
- Rühren eines Gemisches aus einer Polyolkomponente und einer Diisocyanatkomponente, wobei intermediär ein Isocyanat-Prepolymer mit einem Restgehalt an monomerem Diisocyanat von > 2 Gew.% erhalten wird;
- Eindispergieren von Pigmenten und anorganischen Füllstoffen und Zugeben von Lösungsmittel unter Rühren, wobei der Restgehalt an monomerem Diisocyanat mit der über die Füllstoffe eingebrachten Feuchtigkeit reagiert und ein H20-Gehalt von < 0,01 Gew.% in der Reaktionsmischung erhalten wird;
- Zugeben eines H₂O-reaktiven latenten Härters und ggf. mindestens eines Katalysators und luftdichtes Abfüllen der resultierenden Dichtungs- und Beschichtungsmasse.

2. Verfahren nach Anspruch 1, dadurch gekennzeichnet, daß als Polyolkomponente ein Gemisch aus einem Polyetherpolyol mit einem Polyesterpolyol und/oder einem Polyesterpolyetherpolyol, Polyesterpolycarbonatdiol, Polyhydroxyacrylat verwendet wird.

3. Verfahren nach Anspruch 2, dadurch gekennzeichnet, daß als Polyetherpolyolkomponente Polyetherpolyole eines mittleren Molekulargewichts von 1000 bis 6000 g/Mol mit eingebauten Ethylenoxid- und/oder Propylenoxideinheiten verwendet werden.

4. Verfahren nach Anspruch 3, dadurch gekennzeichnet, daß als Polyetherpolyolkomponente ein Polypropylenglycol, difunktionell, mit einem mittleren Molekulargewicht von 2000 g/Mol oder ein Polypropylenglycol, trifunktionell, mit einem mittleren Molekulargewicht von 4000 g/Mol verwendet wird.

5. Verfahren nach Anspruch 2, dadurch gekennzeichnet, daß ein Polyesterpolycarbonatdiol mit einem mittleren Molekulargewicht von 2000 g/Mol, vorzugsweise auf Basis des Polycarbonats des 6-Hydroxyhexansäure-6-hydroxyhexylesters, verwendet wird.

6. Verfahren nach den Ansprüchen 1 bis 5, dadurch gekennzeichnet, daß als Diisocyanatkomponente mindestens ein cycloaliphatisches Diisocyanat verwendet wird.

7. Verfahren nach Anspruch 6, dadurch gekennzeichnet, daß als Diisocyanatkomponente 1-Isocyanato-3,3,5-trimethyl-5-isocyanatomethyl-cyclohexan (IPDI) verwendet wird.

8. Verfahren nach einem der Ansprüche 1 bis 7, dadurch gekennzeichnet, daß Polypropylenglycol und Polyesterpolycarbonatdiol und 1-Isocyanato-3,3,5-trimethyl-5-isocyanatomethylcyclohexan (IPDI) im molaren Verhältnis 1 : 1 : 4 in einem Vakuumdissolver unter Rühren während etwa 90 Minuten bei etwa 90 °C umgesetzt werden, wobei sich ein Restgehalt an monomerem Diisocyanat (IPDI) von 2,5 bis 2,8 Gew.% in der Reaktionsmischung einstellt.

9. Verfahren nach einem der Ansprüche 1 bis 8, dadurch gekennzeichnet, daß bei etwa 90 °C Pigment, Füllstoff und Lösungsmittel in die Reaktionsmischung eingetragen und unter starkem Rühren gleichmäßig darin dispergiert werden, daß das Gemisch auf Raumtemperatur abgekühlt wird und sodann der latente Härter und ggf. der mindestens eine Katalysator eingetragen werden.

10. Verfahren nach einem der Ansprüche 1 bis 9, dadurch gekennzeichnet, daß Pigmente und anorganische Füllstoffe aus der Gruppe von Schwerspat (BaSO₄), Calciumcarbonat, Talkum oder Quarzmehl mit einem Feuchtigkeitsgehalt von 0,1 bis 1 Gew.% H₂O, bezogen auf den Füllstoff, in einer Menge bis zu 60 Gew.%, bezogen auf das Gesamtgewicht der Komponenten, eingetragen werden.

11. Verfahren nach einem der Ansprüche 1 bis 10, dadurch gekennzeichnet, daß ein Lösungsmittel aus der Gruppe von Ethylacetat, Butylacetat, Methylethylketon, Methoxypropylacetat, Toluol, Xylol oder Gemische derselben in einer Menge bis zu 20 Gew.%, bezogen auf das Gesamtgewicht der Komponenten, eingetragen wird.

12. Verfahren nach einem der Ansprüche 1 bis 11, dadurch gekennzeichnet, daß ein latenter Härter aus der Gruppe von Oxazolidin, Bisoxazolidin, Ketimin oder Aldimin und ggf. mindestens ein Katalysator aus der Gruppe von p-Toluolsulfonsäure, Dibutylzinndilaurat, Zinkchlorid und organischen Säureanhydriden eingetragen werden.

## Claims

1. Method for producing one-component sealing- and coating compounds with a polyurethane base by
- stirring of a mixture of one polyolcomponent and one diisocyanatecomponent, so an isocyanate prepolymer with a rest of monomeric diisocyanate of > 2 weight % is obtained intermediary;
- disperging of pigments and inorganic filling material and adding of solvents while stirring, so that the rest of monomeric diisocyanate reacts with the water content that is introduced by the filling material. Some H₂O content of < 0,01 weight % is obtained in the reaction mixture;
- adding of a H₂O reactive latent curing agent and of at least one catalyst if necessary, and air-proof filling of the resulting sealing- and coating compound.

2. Method according to claim 1, wherein said the polyolcomponent is a mixture of one polyetherpolyole with one polyesterpolyol and/or one polyesterpolyether-polyol, polyesterpolycarbonatediol, polyhydroxyacrylate.

3. Method according to claim 2, wherein said the polyetherpolyol-component is composed out of polyetherpolyols of an average molecular weight of 1000 to 6000 g/mol with incorporated ethyleneoxide- and/or propyleneoxide units.

4. Method according to claim 3, wherein said the polyetherpolyol-component is a polypropyleneglycol, difunctional, with an average molecular weight of 2000 g/mol or a polypropyleneglycol, trifunctional, with an average molecular weight of 4000 g/mol.

5. Method according to claim 2, wherein said a polyesterpolycarbonatediole with an average molecular weight of 2000 g/mol, preferably on the basis of the polycarbonate of 6-hydroxyhexaneacid-6-hydroxyhexylester is used.

6. Method according to the claims 1 to 5, wherein said at least one cycloaliphatic diisocyanate as diisocyanate component is used.

7. Method according to claim 6, wherein said 1-isocyanato-3,3,5-trimethyl-5-isocyanatomethylcyclohexane (IPDI) is used as diisocyanatecomponent.

8. Method according to one of the claims 1 to 7, wherein said the reaction of polypropyleneglycol and polyesterpolycarbonatediol and 1-isocyanato-3,3,5-trimethyl-5-isocyanatomethylcyclohexane (IPDI) in a molar ratio of 1:1:4 while being stirred in a vacuumdissolver for about 90 minutes at about 90 °C so that the rest content of monomeric diisocyanate (IPDI) of 2,5 to 2,8 weight % is stated in the reaction mixture.

9. Method according to one of the claims 1 to 8, wherein the pigment, filling material and solvent are added at about 90°C into the reaction mixture and are disperged while strongly being stirred, then the reaction mixture is cooled down to room temperature and then the latent curing agent and at least one catalyst, if necessary, are added.

10. Method according to one of the claims 1 to 9, wherein said pigments and inorganic filling materials out of the group of barium sulfate (BaSO₄), calcium carbonate, talc or quartz powder with a water content of 0,1 to 1 weight % H₂O, related to the filling material, in a quantity up to 60 weight %, related to the total weight of the components, are added.

11. Method according to one of the claims 1 to 10 wherein said solvents out of the group of ethylacetate, butylacetate, methylethylketone, methoxypropylacetate, toluene, xylene, or mixtures of the same in an amount up to 20 weight %, related to the total weight of the components, are added.

12. Method according to one of the claims of 1 to 11, wherein said a latent hardener out of the group of oxazolidine, bisoxazolidine, ketimine or aldimine and of at least one catalyst out of the group of p-toluenesulfoneacid, dibutyltindilaurate, zincchloride and organic acidanhydrides, if necessary, are added.

## Revendications

1. Procédé de production de masses d'étanchéité et de recouvrement à un composant à base de polyuréthane par
- brassage d'un mélange composé d'un composant de polyol et d'un composant de diisocyanate, au cours duquel on obtient en intermédiaire un pré-polymère d'isocyanate présentant une teneur résiduelle en diisocyanate monomère supérieure à 2 % en masse ;
- dispersion par ajout de pigments et de matières de charge inorganiques et ajout de solvant sous agitation, la teneur résiduelle en diisocyanate monomère réagissant avec l'humidité apportée par le biais des matières de charge pour donner une teneur en H₂O inférieure à 0,01 % en masse dans le mélange de réaction ;
- ajout d'un durcisseur latent réactif à H₂O et éventuellement d'au moins un catalyseur et mise en conteneur hermétique de la masse d'étanchéité et de recouvrement obtenue.

2. Procédé selon la revendication 1, caractérisé en ce que l'on utilise en tant que composant de polyol un mélange composé d'un polyéther-polyol avec un polyester-polyol et/ou un polyester-polyétherpolyol, un polyester-polycarbonate-diol et un polyhydroxy-acrylate.

3. Procédé selon la revendication 2, caractérisé en ce que l'on utilise en tant que composant de polyéther-polyol des polyéther-polyols présentant une masse moléculaire moyenne comprise entre 1 000 et 6 000g/mole avec des unités incorporées d'oxyde d'éthylène et/ou d'oxyde de propylène.

4. Procédé selon la revendication 3, caractérisé en ce que l'on utilise en tant que composant de polyéther-polyol un polypropylèneglycol, difonctionnel, présentant une masse moléculaire moyenne de 2 000 g/mole ou un polypropylèneglycol trifonctionnel présentant une masse moléculaire moyenne égale à 4 000 g/mole.

5. Procédé selon la revendication 2, caractérisé en ce que l'on utilise un polyester-polycarbonate-diol présentant une masse moléculaire moyenne égale à 2 000 g/mole, de préférence à base du polycarbonate de l'ester 6-hydroxyhexylique de l'acide 6-hydroxycaproïque.

6. Procédé selon les revendications 1 à 5, caractérisé en ce que l'on utilise en tant que composant de diisocyanate au moins un diisocyanate cycloaliphatique.

7. Procédé selon la revendication 6, caractérisé en ce que l'on utilise en tant que composant de diisocyanate le 1-isocyanato-3,3,5-triméthyl-5-isocyanatométhyl-cyclohexane (IPDI).

8. Procédé selon l'une des revendications 1 à 7, caractérisé en ce que l'on fait réagir le polypropylèneglycol, le polyester-polycarbonate-diol et le 1-isocyanato-3,3,5-triméthyl-5-isocyanatométhyl-cyclohexane (IPDI) selon un rapport molaire de 1:1:4 dans un disperseur à vide et sous agitation pendant 90 minutes à environ 90°C, au cours de laquelle s'établit une teneur résiduelle en diisocyanate monomère (IPDI) comprise entre 2,5 et 2,8 % en masse dans le mélange de réaction.

9. Procédé selon l'une des revendications 1 à 8, caractérisé en ce que sont incorporés et dispersés régulièrement sous agitation importante dans le mélange de réaction, à environ 90 °C, le pigment, la matière de charge et le solvant, en ce que le mélange est refroidi à la température ambiante puis en ce que le durcisseur latent et éventuellement au moins un catalyseur sont incorporés.

10. Procédé selon l'une des revendications 1 à 9, caractérisé en ce que les pigments et les matières de charge inorganiques issues du groupe de la barytine (BaSO₄), du carbonate de calcium, du talc ou de la poudre de quartz, présentant une teneur en humidité comprise entre 0,1 et 1 % en masse de H₂O, sur la base de la matière de charge, sont incorporés dans une quantité allant jusqu'à 60 % en masse, sur la base de la masse totale des composants.

11. Procédé selon l'une des revendications 1 à 10, caractérisé en ce que l'on incorpore un solvant issu du groupe de l'acétate d'éthyle, de l'acétate de butyle, de la méthyléthylcétone, de l'acétate de méthoxypropyle, du toluène, du xylène ou de mélanges de ceux-ci dans une quantité allant jusqu'à 20 % en masse, sur la base de la masse totale des composants.

12. Procédé selon l'une des revendications 1 à 11, caractérisé en ce que l'on incorpore un durcisseur latent issu du groupe composé de l'oxazolidine, de la bisoxazolidine, de la cétimine ou de l'aldimine, et éventuellement au moins un catalyseur issu du groupe formé de l'acide p-toluène-sulfonique, du dilaurate de dibutylétain, du chlorure de zinc et d'anhydrides d'acides organiques.
